# EUROPÄISCHE PATENTSCHRIFT

(11) **EP 2 501 979 B1**
(45) Veröffentlichungstag und Bekanntmachung des Hinweises auf die Patenterteilung: **13.08.2014**
(21) Anmeldenummer: 10728219.6
(22) Anmeldetag: 29.06.2010
(51) Int. Cl.: F16L 37/14

(54) **ANSCHLUSSVORRICHTUNG**
CONNECTION DEVICE
DISPOSITIF DE RACCORDEMENT

(30) Priorität: 18.11.2009 DE 102009053696
(43) Veröffentlichungstag der Anmeldung: 26.09.2012
(73) Patentinhaber: Mahle International GmbH, 70376 Stuttgart (DE)
(72) Erfinder: BUNDY, Gabriel, R-300488 Timisoara (RO); PRÖTTEL, Thomas, 73728 Esslingen (DE); SCHIESZL, Andreas, 73479 Ellwangen (DE)
(74) Vertreter: BRP Renaud & Partner
(86) Internationale Anmeldenummer: PCT/EP2010/059196
(87) Internationale Veröffentlichungsnummer: WO 2011/060967

(56) Entgegenhaltungen:
- EP-A2- 2 131 090
- US-B1- 6 179 347

## Beschreibung

Die vorliegende Erfindung betrifft eine Anschlussvorrichtung für einen eine ringförmige Außennut aufweisenden Steckabschnitt einer schlauchförmigen oder rohrförmigen Leitung oder eines Stutzens, mit den Merkmalen des Oberbegriffs des Anspruchs 1.

Aus der EP 1 845 299 B1 ist eine Anschlussvorrichtung dieser Art bekannt. Sie umfasst ein Gehäuse, in welches der Steckabschnitt einsteckbar ist. Die bekannte Anschlussvorrichtung weist außerdem ein Sperrelement auf, mit dem der in das Gehäuse eingesteckte Steckabschnitt im Gehäuse arretierbar ist. Das Sperrelement greift zum Arretieren des Steckabschnitts im Gehäuse in die Außennut des Steckabschnitts und in eine im Gehäuse ausgebildete ringförmige Innennut ein. Das Sperrelement ist durch eine Gehäuseöffnung im Wesentlichen tangential zu den Nuten aus diesen herausziehbar. Ferner ist das Sperrelement in der Innennut vormontierbar und erlaubt im vormontierten Zustand unter elastischer Auslenkung das Einsstecken des Steckabschnitts in das Gehäuse, wobei dann das Sperrelement in die Außennut einrastet. Des Weiteren ist bei der Anschlussvorrichtung das Sperrelement im vormontierten Zustand am Gehäuse gegen ein Verschieben in der Umfangsrichtung gesichert.

Bei der bekannten Anschlussvorrichtung befindet sich das Sperrelement im vormontierten Zustand weitgehend innerhalb des Außenumfangs des Gehäuses. Die Verschiebesicherung des Sperrelements erfolgt ausschließlich innerhalb des Außenumfangs des Gehäuses, und zwar im Bereich der Gehäuseöffnung.

Weitere Anschlussvorrichtungen, die ein Gehäuse, einen Steckabschnitt und ein Sperrelement umfassen, sind bspw. aus der US 6,179,347 B1 und aus der US 3,606,402 bekannt.

Die vorliegende Erfindung beschäftigt sich mit dem Problem, für eine Anschlussvorrichtung der eingangs genannten Art eine verbesserte Ausführungsform anzugeben, die sich insbesondere durch eine verbesserte Verschiebesicherung auszeichnet.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, die Verschiebesicherung des Sperrelements zumindest in der Auszugsrichtung außen am Gehäuse zu realisieren. Hierzu wird eine außen am Gehäuse angeordnete Sicherungseinrichtung vorgeschlagen. Durch die Anordnung einer derartigen Sicherungseinrichtung außen am Gehäuse ergibt sich eine vereinfachte Zugänglichkeit, was die Handhabung der Sicherungseinrichtung und somit der Anschlussvorrichtung verbessert. Des Weiteren steht außen am Gehäuse deutlich mehr Bauraum zur Verfügung als im Bereich der Gehäuseöffnung, so dass eine besonders zuverlässig arbeitende Verschiebesicherung realisierbar ist.

Entsprechend einer vorteilhaften Ausführungsform kann die Sicherungseinrichtung einen außen am Gehäuse angeordneten Außenanschlag aufweisen, der einem außen liegenden Ende des Sperrelements im vormontierten Zustand in der Auszugsrichtung gegenüberliegt. Ein derartiger Außenanschlag bewirkt eine besonders effektive Sicherung gegen Verschieben des Sperrelements in der Auszugsrichtung.

Gemäß einer anderen vorteilhaften Ausführungsform kann die Sicherungseinrichtung eine außen am Gehäuse angeordnete Aufnahmetasche aufweisen, in die ein außen liegendes Ende des Sperrelements im vormontierten Zustand eingesteckt ist. Eine derartige Aufnahmetasche ermöglicht einerseits eine effektive Sicherung gegen ein Verschieben des Sperrelements in der Auszugsrichtung. Andererseits verhindert eine derartige Aufnahmetasche auch eine zufällige Betätigung des Sperrelements, um eine unerwünschte Entsicherung zu vermeiden.

Diese Aufnahmetasche kann entsprechend einer besonders vorteilhaften Weiterbildung an einer Axialseite offen sein, derart, dass das außen liegende Ende des Sperrelements durch die offene Axialseite in die Aufnahmetasche einsteckbar und daraus herausziehbar ist. Diese Ausführungsform bewirkt, dass das außen liegende Ende des Sperrelements in zwei senkrecht aufeinander stehenden Richtungen bewegt werden muss, um die mit Hilfe der Anschlussvorrichtung erzeugte Verbindung lösen zu können. Ein zufälliges oder versehentliches Öffnen der Verbindung kann dadurch besser vermieden werden.

Entsprechend einer anderen vorteilhaften Ausführungsform, die auch eine selbstständige Lösung des vorliegenden Problems repräsentieren kann, kann die Gehäuseöffnung in der Umfangsrichtung größer sein, insbesondere zumindest zwei Mal größer sein, als in Axialrichtung. Mit anderen Worten, die Erfindung beruht hierbei auf dem allgemeinen Gedanken, die Gehäuseöffnung in der Umfangsrichtung vergleichsweise groß zu dimensionieren. Dies hat zur Folge, dass das Sperrelement beim Einsetzen und beim Herausziehen kaum verformt werden muss, so dass es nur vergleichsweise wenig auf Biegung beansprucht wird. Gleichzeitig wird dadurch das Einführen und Herausziehen des Sperrelements vereinfacht. Insbesondere das Herausziehen wird signifikant verbessert, da vergleichsweise große Zugkräfte einleitbar sind.

Entsprechend einer anderen Ausführungsform kann die Sicherungseinrichtung eine außen am Gehäuse angeordnete Vertiefung aufweisen, in die ein Vorsprung eingreift, der von einem außenliegenden Ende des Sperrelements nach innen absteht. Hierdurch wird ein in Umfangsrichtung wirkender Formschluss zwischen dem Gehäuse und dem Sperrelement erzeugt, der das Sperrelement relativ zum Gehäuse positioniert. Darüber hinaus vereinfacht der Vorsprung das manuelle Herausziehen des Sperrelements. Somit kann durch diese Bauweise die Handhabung der Anschlussvorrichtung verbessert werden.

Gemäß einer weiteren Ausführungsform kann das Gehäuse außen zumindest eine sich in Umfangsrichtung erstreckende Umfangsrippe aufweisen. Eine derartige Umfangsrippe führt zu einer signifikanten Aussteifung des Gehäuses im Bereich der jeweiligen Umfangsrippe. Vorzugsweise kann eine solche Umfangsrippe an einem die Einstecköffnung zum Einstecken des Steckabschnitts aufweisenden Ende des Gehäuses angeordnet sein. Somit wird das Gehäuse an seinem freien Ende stabilisiert. Von Vorteil ist eine Ausführungsform, bei der zumindest zwei solche Umfangsrippen vorgesehen sind, die axial voneinander beabstandet sind. Insbesondere lassen sich die beiden Umfangsrippen am Gehäuse so positionieren, dass die Innennut axial zwischen den beiden Umfangsrippen angeordnet ist. Auf diese Weise wird erreicht, dass das Gehäuse gezielt im Bereich der Innennut verstärkt ist. Optional kann vorgesehen sein, das Gehäuse außen mit mehreren, sich in Längsrichtung erstreckenden Längsrippen zu versehen, die insbesondere jeweils zwei Umfangsrippen miteinander verbinden. Auch hierdurch lässt sich eine Versteifung des Gehäuses realisieren.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung, die in den Ansprüchen beansprucht wird, zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: einen halben Längsschnitt einer Anschlussvorrichtung,
- Fig. 2: einen Querschnitt der Anschlussvorrichtung im Bereich eines Sperrelements,
- Fig. 3: eine perspektivische Ansicht eines Gehäuses der Anschlussvorrichtung,
- Fig. 4: eine perspektivische Ansicht des Sperrelements,
- Fig. 5: eine teilweise perspektivische Detailansicht der Anschlussvorrichtung im Längsschnitt im Bereich des Sperrelements,
- Fig. 6: eine Ansicht wie in Fig. 5, jedoch bei einer anderen Ausführungsform,
- Fig. 7: eine Teilansicht wie in Fig. 3, im Bereich einer Sicherungseinrichtung,
- Fig. 8: eine Seitenansicht der Anschlussvorrichtung im Bereich der Sicherungseinrichtung,
- Fig. 9: eine Ansicht wie in Fig. 8, jedoch bei einer anderen Ausführungsform,
- Fig. 10: eine vergrößerte Detailansicht des Sperrelements,
- Fig. 11: einen Längsschnitt des Sperrelements,
- Fig. 12: einen Querschnitt der Anschlussvorrichtung im Bereich einer Sicherungseinrichtung,
- Fig. 13: eine perspektivische Ansicht eines Gehäuses der Anschlussvorrichtung,
- Fig. 14 bis 17: Längsschnitte der Anschlussvorrichtung im Bereich eines Sperrelements, bei verschiedenen Ausführungsformen.

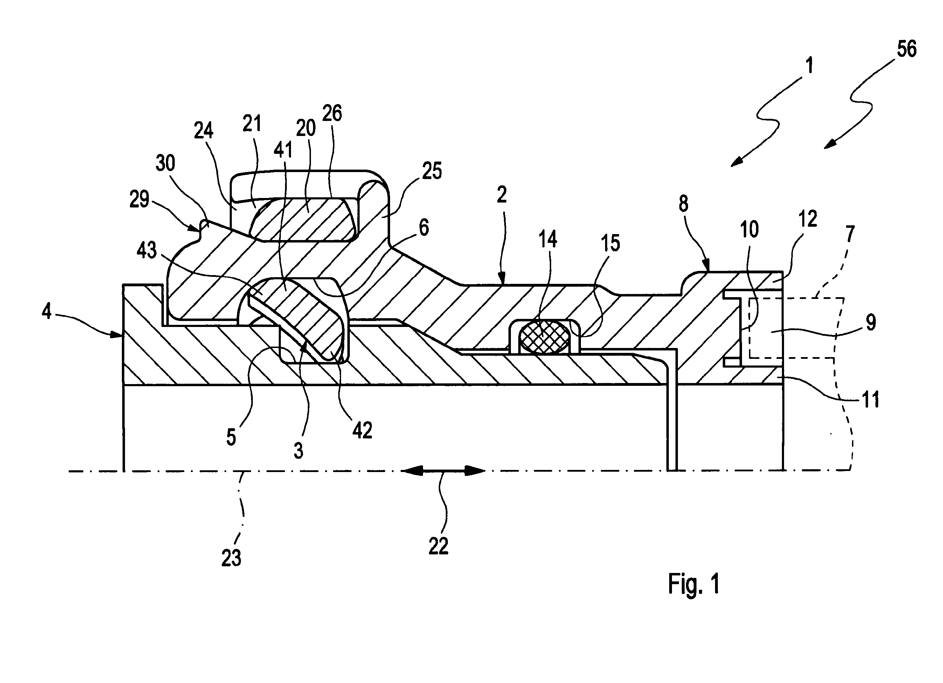

Entsprechend den Fig. 1 bis 17 und insbesondere mit Bezug auf Fig. 1 umfasst eine Anschlussvorrichtung 1 ein Gehäuse 2 sowie ein Sperrelement 3. Die Anschlussvorrichtung 1 ist zum Herstellen eines Anschlusses für einen Steckabschnitt 4 vorgesehen. Der Steckabschnitt 4 ist bei den hier gezeigten Ausführungsformen als Stutzen ausgestaltet. Ebenso ist es möglich, den Steckabschnitt 4 als schlauchförmige oder rohrförmige Leitung auszugestalten oder als Endabschnitt eines Schlauchs oder eines Rohrs auszugestalten. Dieser Steckabschnitt 4 weist an seiner Außenseite eine ringförmige Außennut 5 auf.

Die Anschlussvorrichtung 1 kommt bevorzugt in Kraftfahrzeugen zum Einsatz, z.B. in einer Frischluftanlage des Fahrzeugs zur Versorgung einer Brennkraftmaschine des Fahrzeugs mit Frischluft. Insbesondere betrifft die Erfindung somit auch eine Frischluftanlage zur Frischluftversorgung einer Brennkraftmaschine, insbesondere eines Kraftfahrzeugs, die mit einer derartigen Anschlussvorrichtung 1 ausgestattet ist.

Der Steckabschnitt 4, insbesondere in Form des Stutzens, kann bei einer speziellen Ausführungsform an einem Saugmodul, insbesondere einer Frischluftanlage, oder an einem Filtergehäuse, insbesondere zur Luftfiltration, z.B. in einer Frischluftanlage, angeordnet sein, z.B. verschraubt, verschweißt oder verclipst. Besonders vorteilhaft kann eine Ausführungsform sein, bei welcher der Steckabschnitt 4, z.B. in Form des Stutzens, integral, z.B. mittels Kunststoffspritzguss, am Saugmodul oder am Filtergehäuse ausgeformt ist.

Das Gehäuse 2 ist so ausgestaltet, dass der Steckabschnitt 4 in das Gehäuse 2 einsteckbar ist. Ferner weist das Gehäuse 2 an seiner Innenseite eine ringförmige Innennut 6 auf. Das Gehäuse 2 ist hülsenförmig ausgestaltet. Es kann als Stutzen konzipiert sein. Ebenso kann es als Endstück für eine in Fig. 1 mit unterbrochener Linie angedeutete rohrförmige oder schlauchförmige Leitung 7 konzipiert sein.

Besagte Leitung 7 kann bspw. als Blasformteil konzipiert sein, das stirnseitig mit dem Gehäuse 2 verbunden werden kann. Als Verbindung eignet sich bspw. eine Schweißverbindung, insbesondere eine Reibschweißverbindung. Im Beispiel der Fig. 1 ist das Gehäuse an seinem vom Sperrelement 3 entfernten Ende mit einem Anschlussbereich 8 versehen, der sich in besonderer Weise zum Herstellen einer Reibschweißverbindung eignet. Insbesondere umfasst dieser Anschlussbereich 8 eine axiale Ringnut 9, die am Nutgrund einen in die Nut 9 vorstehenden Vorsprung 10 aufweist, der sowohl zu einer Innenwand 11 als auch zu einer Außenwand 12 der Nut 9 beabstandet ist. Beim Reibschweißen schmilzt dieser Vorsprung 10 zumindest teilweise auf, wodurch die Lücken zwischen dem Vorsprung 10 und den Wänden 11, 12, zumindest teilweise ausgefüllt werden.

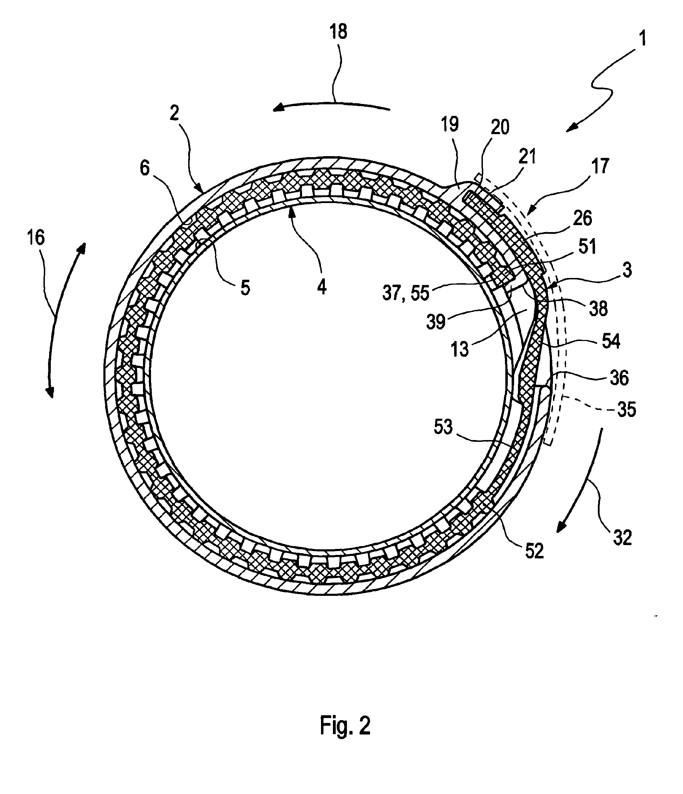

Das Sperrelement 3 dient zum Arretieren des in das Gehäuse 2 eingesteckten Steckabschnitts 4 am Gehäuse 2. Hierzu greift das Sperrelement 3 einerseits in die Außennut 5 des Steckabschnitts 4 und andererseits in die Innennut 6 des Gehäuses 2 ein. Des Weiteren weist das Gehäuse 2 eine zumindest in den Fig. 2, 3 und 7 erkennbare Gehäuseöffnung 13 auf, die das Gehäuse 2 radial durchsetzt. Durch diese Gehäuseöffnung 13 hindurch kann das Sperrelement 3 aus der Innennut 6 und aus der Außennut 5 herausgezogen werden. Durch Herausziehen des Sperrelements 3 aus der Anschlussvorrichtung 1 kann die mittels des Sperrelements 3 hergestellte Verrastung zwischen Steckabschnitt 4 und Gehäuse 2 aufgehoben werden, wodurch die Verbindung gelöst ist und der Steckabschnitt 4 aus dem Gehäuse 2 herausgezogen werden kann.

Das Sperrelement 3 ist außerdem in der Innennut 6 vormontierbar. Das heißt, das Sperrelement 3 kann in der Innennut 6 so montiert werden, dass es auch bei fehlendem Steckabschnitt 4 in der Innennut 6 bzw. am Gehäuse 2 verbleibt. In diesem vormontierten Zustand erlaubt das Sperrelement 3 das Einstecken des Steckabschnitts 4 in das Gehäuse 2. Hierbei kommt es zu einer elastischen Verformung bzw. Auslenkung des Sperrelements 3 sowie zu einer Verrastung mit der Außennut 5, wenn der Steckabschnitt 4 eine vorgesehene Einstecktiefe erreicht.

In Fig. 1 ist außerdem eine Dichtung 14 dargestellt, die bspw. als O-Ring ausgestaltet sein kann. Im Beispiel der Fig. 1 ist die Dichtung 14 in eine weitere, an der Innenseite des Gehäuses 2 ausgebildete ringförmige Innennut 15 eingesetzt, die beabstandet zu der dem Sperrelement 3 zugeordneten Innennut 6 angeordnet und zwischen besagter Innennut 6 und dem Anschlussabschnitt 8 positioniert ist.

Im vormontierten Zustand ist das Sperrelement 3 am Gehäuse 2 gegen ein Verschieben in der Umfangsrichtung, die in Fig. 2 durch einen Doppelpfeil angedeutet und mit 16 bezeichnet ist, gesichert. Diese Verschiebesicherung des Sperrelements 3 kann mit Hilfe einer Sicherungseinrichtung 17 realisiert werden. Diese Sicherungseinrichtung 17 ist dabei außen am Gehäuse 2 angeordnet. Sie sichert das Sperrelement 3 gegen eine Verschiebung relativ zum Gehäuse 2 in der Umfangsrichtung 16 zumindest in der in Fig. 2 durch einen Pfeil angedeuteten Auszugsrichtung 18.

Die Sicherungseinrichtung 17 umfasst zweckmäßig einen Außenanschlag 19, der außen am Gehäuse 2 angeordnet ist. Im vormontierten Zustand liegt dieser Außenanschlag 19 einem außen liegenden Ende 20 des Sperrelements 3 in der Auszugsrichtung 18 gegenüber. Besonders zweckmäßig ist die hier gezeigte Ausführungsform, bei welcher die Sicherungseinrichtung 17 des Weiteren mit einer Aufnahmetasche 21 ausgestattet ist, die ebenfalls außen am Gehäuse 2 angeordnet ist. Im vormontierten Zustand ist in diese Aufnahmetasche 21 das außen liegende Ende 20 des Sperrelements 3 eingesteckt. Zweckmäßig kann in dieser Aufnahmetasche 21 der vorstehend genannte Außenanschlag 19 ausgebildet sein. Dementsprechend liegt das außen liegende Ende 20 im vormontierten Zustand innerhalb der Aufnahmetasche 21 dem Außenanschlag 19 in der Umfangsrichtung 16 gegenüber.

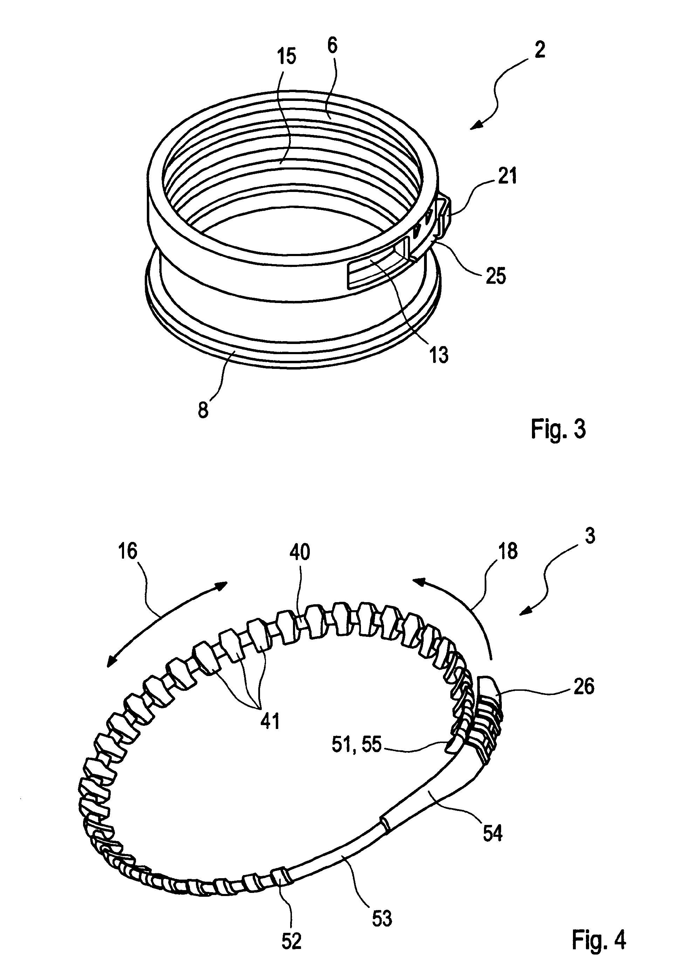

Entsprechend den Fig. 3, 5 und 7 bis 9 ist die Aufnahmetasche 21 gemäß bevorzugter Ausführungsformen an einer Axialseite offen. Die Axialrichtung der Anschlussvorrichtung 1 ist zum Beispiel in Fig. 1 durch einen Doppelpfeil angedeutet und mit 22 bezeichnet. Sie liegt dabei auf einer Längsmittelachse 23 des Gehäuses 2 bzw. der Vorrichtung 1. Durch die axial offene Seite der Aufnahmetasche 21 wird eine axiale Öffnung 24 oder offene Axialseite 24 gebildet, die in Fig. 1 erkennbar ist und die bspw. vom Anschlussabschnitt 8 abgewandt ist. Das außen liegende Ende 20 des Sperrelements 3 kann durch diese Öffnung 24, also durch die offene Axialseite 24 in die Aufnahmetasche 21 eingesteckt werden bzw. daraus herausgezogen werden. Die Verstellbewegung des außen liegenden Endes 20 des Sperrelements 3 zum Sichern in der Aufnahmetasche 21 bzw. zum Entsichern erfolgt dabei axial, also quer zur Umfangsrichtung 16 und somit quer zur Auszugsrichtung 18. Hierdurch wird eine besonders effektive Sicherung des Sperrelements 3 im vormontierten Zustand realisiert.

Bei den hier gezeigten Ausführungsformen ist die Aufnahmetasche 21 gegenüber der offenen Axialseite 24, also gegenüber der Öffnung 24 geschlossen ausgestaltet. Ferner ist die Aufnahmetasche 21 in der Umfangsrichtung, und zwar in Richtung zur Gehäuseöffnung 15 mit Hilfe eines Auflagestegs 25 verlängert. Entsprechend den Fig. 1, 8 und 9 kann im vormontierten Zustand ein außen liegender Endabschnitt 26 des Sperrelements 3, der das außen liegende Ende 20 aufweist, an diesem Auflagesteg 25 axial zur Anlage kommen. Hierdurch ergibt sich für den vormontierten Zustand eine axiale Lagesicherung für den außen liegenden Endabschnitt 26.

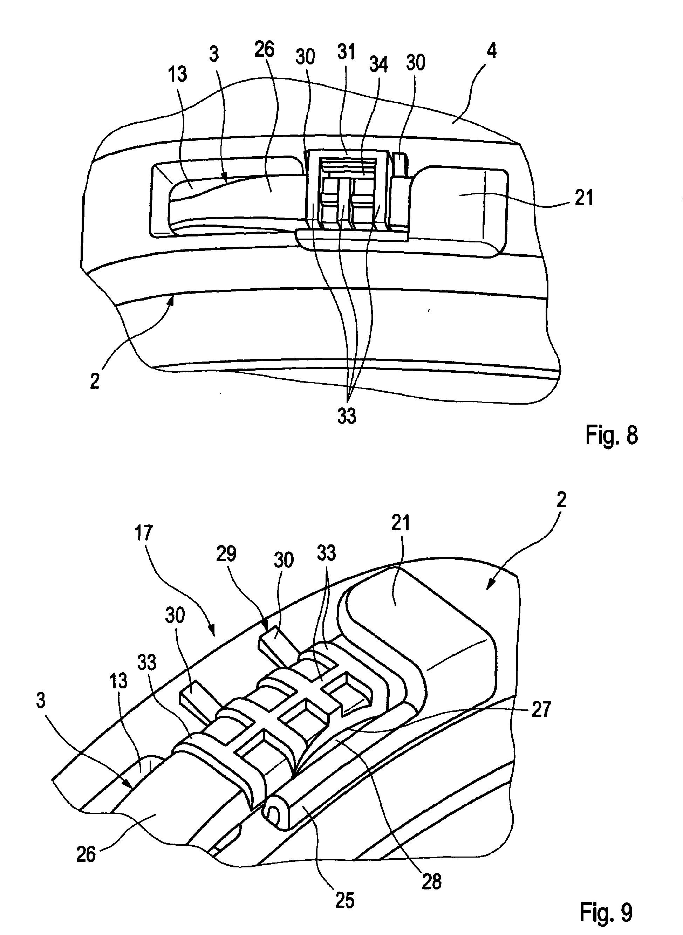

Gemäß Fig. 8 kann der außen liegende Endabschnitt 26 im Wesentlichen flächig am Auflagesteg 25 zur Anlage kommen. Alternativ dazu zeigt Fig. 9 eine Ausführungsform, bei welcher das Sperrelement 3 an seinem außen liegenden Endabschnitt 26 eine axial orientierte Einbuchtung 27 aufweisen, die so positioniert ist, dass sich im vormontierten Zustand zwischen dem Endabschnitt 26 und dem Auflagesteg 25 ein Schlitz 28 ausbildet, der so dimensioniert ist, dass er als Werkzeugeingriff verwendet werden kann. Beispielsweise kann in den Schlitz 28 ein flacher Schraubendreher eingesteckt werden, um durch Hebeln oder Verdrehen den Endabschnitt 26 aus der Aufnahmetasche 21 seitlich, also axial, herauszubewegen.

Die Sicherungseinrichtung 17 kann zusätzlich oder alternativ zu den vorbeschriebenen Merkmalen mit einer Rasteinrichtung 29 ausgestattet sein. Diese Rasteinrichtung 29 umfasst zumindest eine Raste 30. Bei den hier gezeigten Ausführungsformen sind jeweils zwei derartige Rasten 30 vorgesehen. Die jeweilige Raste 30 wirkt im vormontierten Zustand mit dem außen liegenden Endabschnitt 26 des Sperrelements 3 zusammen. Dabei behindert die jeweilige Raste 30 ein axiales Verstellen dieses außen liegenden Endabschnitts 26 relativ zum Gehäuse 2. Im Beispiel sind die Rasten 30 als Rampen ausgestaltet, die in Richtung zum Auflagesteg 25 abfallen.

Das Sperrelement 3 kann gemäß der in Fig. 8 gezeigten Ausführungsform an seinem außen liegenden Endabschnitt 26 einen axial abstehenden Bereich 31 aufweisen. Sofern wie hier zwei Rasten 30 vorgesehen sind, können die Abmessung dieses axial abstehenden Bereichs 31 und der Abstand zwischen den beiden Rasten 30 so aufeinander abgestimmt sein, dass im vormontierten Zustand die beiden Rasten 30 beiderseits des abstehenden Bereichs 31 angeordnet sind und dadurch eine zusätzliche Sicherung des Sperrelements 3 in der Umfangsrichtung 16 bewirken, und zwar sowohl in der Auszugsrichtung 18 als auch in der in Fig. 2 durch einen Pfeil angedeuteten Einsteckrichtung 32.

Wie bspw. den Fig. 4, 8 und 9 entnehmbar ist, kann der außen liegende Endabschnitt 26 des Sperrelements 3 mit radialen Vorsprüngen 33 bzw. Erhebungen 33 ausgestattet sein, die bspw. nach Art einer Verrippung gestaltet sein können. Hierzu erstrecken sich die Vorsprünge 33 in Axialrichtung 22 oder in Umfangsrichtung 16. Durch diese Vorsprünge 33 wird die manuelle Greifbarkeit des Endabschnitts 26 signifikant verbessert. Des Weiteren kann zusätzlich oder alternativ zu derartigen Vorsprüngen 33 gemäß Fig. 8 im außen liegenden Endabschnitt 26, und insbesondere im axial abstehenden Bereich 31 zumindest ein radialer Schlitz 34 vorgesehen sein. Auch dieser Schlitz 34 kann wie der in Fig. 9 gezeigte Schlitz 28 als Werkzeugeingriff konzipiert sein, um bspw. mittels eines flachen Schraubendrehers den Endabschnitt 26 axial aus seiner Sicherung heraus bewegen zu können.

In Fig. 2 ist mit unterbrochener Linie außerdem eine Abdeckung 35 angedeutet, die optional vorgesehen sein kann. Diese Abdeckung 35 befindet sich außen am Gehäuse 2. Sie kann außen an die Tasche 21 angesetzt sein oder integral daran ausgeformt sein. Im vormontierten Zustand kann diese Abdeckung 35 das Sperrelement 3 zumindest im Bereich der Gehäuseöffnung 13 radial abdecken. Im gezeigten Beispiel deckt die Abdeckung 35 auch die Sicherungseinrichtung 17 zumindest teilweise ab. Alternativ ist es ebenso möglich, die Abdeckung 35 bezüglich der Sicherungseinrichtung 17 an der gegenüberliegenden Seite der Gehäuseöffnung 13 am Gehäuse 2 anzubringen, bzw. integral dran auszuformen. Alternativ ist es ebenso möglich, die Abdeckung 35 bezüglich des Gehäuses 2 als separates Bauteil zu konzipieren. Insbesondere kann die Abdeckung 35 dann als Klipp konzipiert sein, der am Gehäuse 2, insbesondere im Bereich der Gehäuseöffnung 13 anbringbar ist. Beispielsweise durch greifende, federnde Klipparme die Gehäuseöffnung 13 in radialer Richtung, um eine Berandung der Gehäuseöffnung 13 zu hintergreifen.

Wie den hier gezeigten Ausführungsformen entnehmbar ist, kann die Gehäuseöffnung 13 in der Umfangsrichtung 16 größer sein als in der Axialrichtung 22. Insbesondere ist die Gehäuseöffnung 13 zumindest in der Umfangsrichtung 16 zumindest zweimal größer als in der Axialrichtung 22. Hierdurch kann eine Biegebeanspruchung des Sperrelements 3 bei einem tangentialen Herausziehen aus der Gehäuseöffnung 13 reduziert werden. Zweckmäßig kann die Gehäuseöffnung 13 in der Umfangsrichtung 16 gleich groß sein wie der im vormontierten Zustand außen liegende Endabschnitt 26 des Sperrelements 3. Die Abmessung in der Umfangsrichtung 16 der Gehäuseöffnung 13 einerseits und des außen liegenden Endabschnitts 26 andererseits sind dabei im Rahmen üblicher Herstellungstoleranzen gleich oder etwa gleich, wobei Maßabweichungen von +/-10% tolerierbar sind.

Die Gehäuseöffnung 13 kann entsprechend einer bevorzugten Ausführungsform ein erstes Ende 36 aufweisen, das im vormontierten Zustand relativ zu einem innenliegenden Ende 37 des Sperrelements 3 distal angeordnet ist. Dieses erste Ende 36 der Gehäuseöffnung 13 ist als radial verlaufender erster Rand ausgestaltet, der von der Innennut 6 direkt radial zu der Außenseite des Gehäuses 2 führt. Mit anderen Worten, die Gehäuseöffnung 13 ist distal zum innen liegenden Ende 37 des Sperrelements 3 mit einem radial orientierten Rand, der durch das erste Ende 36 gebildet ist, begrenzt. Ferner weist die Gehäuseöffnung 13 ein zweites Ende 38 auf, das im vormontierten Zustand bezüglich des innenliegenden Ende 37 des Sperrelements 3 proximal angeordnet ist. Dieses zweite Ende 38 bildet dabei einen radial verlaufenden zweiten Rand der Gehäuseöffnung 13, der sich ebenfalls von der Innenseite des Gehäuses 2 direkt radial zur Außenseite des Gehäuses 2 erstreckt. Somit ist auch hier der zum innen liegenden Ende 37 proximale Rand der Gehäuseöffnung 13, also das zweite Ende 38 radial orientiert.

Zweckmäßig kann besagter zweiter Rand 38 bzw. das zweite Ende 38 der Gehäuseöffnung 13 einen Quersteg 39 aufweisen, der die Innennut 6 in der Umfangsrichtung zur Gehäuseöffnung 13 hin begrenzt. Der Quersteg 39 bildet dadurch einen Anschlag für das Sperrelement 3 in der Einschieberichtung 32.

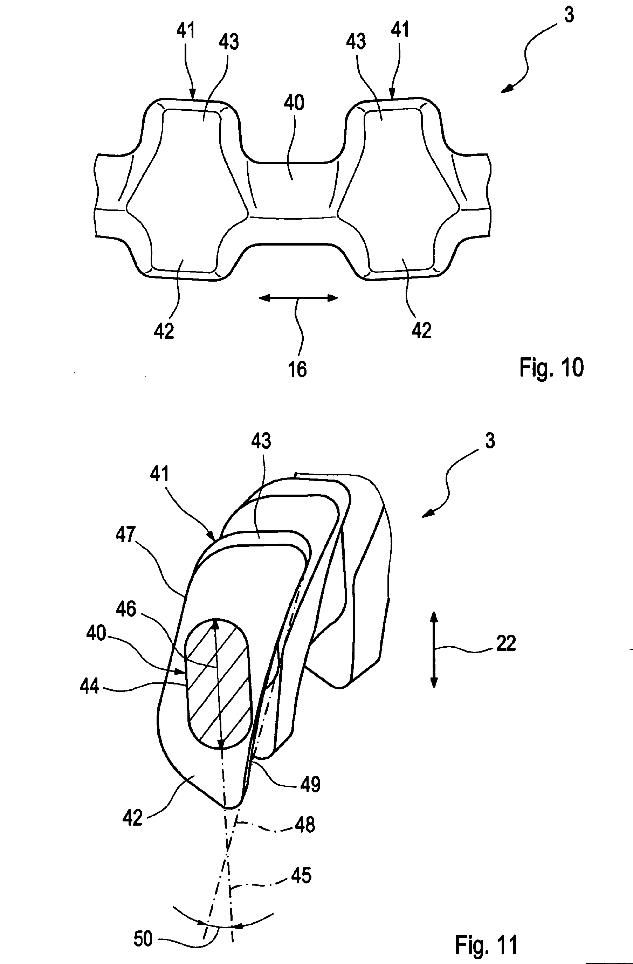

Wie insbesondere den Fig. 4, 10 und 11 zu entnehmen ist, besitzt das Sperrelement 3 bei den hier gezeigten Ausführungsformen eine bandförmige Seele 40 und mehrere Zähne 41, die in der Umfangsrichtung 16 zueinander benachbart und entlang der Seele 40 angeordnet sind. Die Zähne 41 weisen dabei jeweils einen äußeren Zahnabschnitt 42 sowie einen inneren Zahnabschnitt 43 auf. Im eingesteckten Zustand des Steckabschnitts 4 wirken die äußeren Zahnabschnitte 42 mit der Innennut 5 des Steckabschnitts 4 zusammen, während die inneren Zahnabschnitte 43 mit der Außennut 6 des Gehäuses 2 zusammenwirken. Diese inneren Zahnabschnitte 43 und die äußeren Zahnabschnitte 42 stehen von der Seele 40 an sich gegenüberliegenden Seiten ab. Dabei stehen sie von der Seele 40 gemäß Fig. 11 im Wesentlichen axial ab.

Die Seele 40 besitzt zumindest zwischen benachbarten Zähnen 41 entsprechend Fig. 1 im Querschnitt ein Seelenprofil 44, das eine Hauptrichtung 45 besitzt. Die Seelenhauptrichtung 45 wird dabei durch einen Maximaldurchmesser 46 des Seelenprofils 44 bestimmt bzw. definiert. Im Unterschied dazu besitzen die Zähne 41 im Querschnitt jeweils ein Zahnprofil 47, das eine Zahnhauptrichtung 48 aufweist, wobei diese Zahnhauptrichtung 48 durch eine radial innen liegende Zahnflanke 49 des jeweiligen Zahns 41 bestimmt bzw. definiert ist. Die Zahnhauptrichtung 48 entspricht dabei im Wesentlichen einer Geraden, an welcher besagte Innenflanke 49 an zumindest zwei Punkten oder flächig definiert zur Anlage kommt.

Das Sperrelement 3 ist entsprechend Fig. 11 nun so hergestellt, dass die Seelenhauptrichtung 45 mit der Zahnhauptrichtung 48 einen Winkel 50 einschließt. Mit anderen Worten, die Seelenhauptrichtung 45 ist gegenüber der Zahnhauptrichtung 48 geneigt. Erkennbar sind sowohl die Zahnhauptrichtung 48 als auch die Seelenhauptrichtung 45 gegenüber der Axialrichtung 22 geneigt. Vorzugsweise ist die Seelenhauptrichtung 45 dabei in Richtung zur Axialrichtung 22 gegenüber der Zahnhauptrichtung 48 geneigt. Vorzugsweise ist der Winkel 50 zwischen der Seelenhauptrichtung 45 und der Zahnhauptrichtung 48 so groß gewählt, dass die Axialrichtung 22 zwischen der Zahnhauptrichtung 48 und der Seelenhauptrichtung 45 liegt.

Entsprechend Fig. 2 besitzt das Sperrelement 3 den Endabschnitt 26, der im vormontierten Zustand außen am Gehäuse 2 anliegt. Die Dimensionierung des Sperrelements 3 ist in Umfangsrichtung 16 so groß gewählt, dass der außen liegende Endabschnitt 26 im vormontierten Zustand einen innen liegenden Endabschnitt 51 des Sperrelements, der das innen liegende Ende 37 aufweist und der in der Innennut 6 liegt, in der Umfangsrichtung 16 überlappt. Hierdurch ergibt sich eine radiale Überdeckung zwischen dem innen liegenden Endabschnitt 51 und dem außen liegenden Endabschnitt 26.

Der außen liegende Endabschnitt 26 kann gemäß Fig. 4 ein gegenüber der Seele 40 vergrößertes Profil aufweisen. Hierdurch wird die Griffigkeit des außen liegenden Endabschnitts 26 verbessert, was das manuelle Betätigen des Sicherungselements 3 zum Herausziehen aus den Nuten 5, 6 vereinfacht.

Entsprechend den Fig. 2 und 4 kann die Seele 40 zwischen dem außen liegenden Endabschnitt 26 und einem ersten Zahn 52 einen zahnlosen Seelenabschnitt 53 aufweisen, der so groß ist, dass er sich bis in die Innennut 6 hinein erstreckt. Gemäß Fig. 2 liegt der gesamte zahnlose Seelenabschnitt 53 innerhalb der Innennut 6.

Das Sperrelement 3 kann gemäß den Fig. 2 und 4 zwischen dem außen liegenden Endabschnitt 26 und den im Inneren des Gehäuses 2 bzw. in der Innennut 6 verlaufenden Bereich einen verwundenen Übergangsabschnitt 54 aufweisen. Dieser verwundene Übergangsabschnitt 54 zeichnet sich dadurch aus, dass sich in diesem Übergangsabschnitt 54 eine nicht näher bezeichnete Hauptrichtung des Sperrelementprofils ausgehend von einer parallel zur Seelenhauptrichtung 45 verlaufenden Orientierung in Richtung zum außen liegenden Endabschnitt 26 gegenüber der Axialrichtung 22 aufrichtet, und zwar vorzugsweise soweit, dass die Hauptrichtung des Sperrelementprofils im außen liegenden Endabschnitt 26 im Wesentlichen parallel zur Axialrichtung 22 orientiert ist. Hierdurch kann das Sperrelement 3 im Bereich seiner Seele 40 gegenüber der Axialrichtung 22 geneigt verlaufen, während es im Bereich des Endabschnitts 26 parallel zur Axialrichtung 22 verläuft. Dies ermöglicht eine besonders flache und kompakte Bauweise für die Anschlussvorrichtung 1.

Der in der Auszugsrichtung 18 erste Zahn 52 kann mit einer Einführschräge, die das Einführen des Sperrelements 3 in das Gehäuse 2 erleichtert und/oder eine Ausziehschräge aufweisen, die das Ausziehen des Sperrelements 3 aus dem Gehäuse 2 erleichtert. Zusätzlich oder alternativ kann ein in der Auszugsrichtung 18 letzter Zahn 55 eine das Einführen des Sperrelements 3 in das Gehäuse 2 erleichternde Einführschräge und/oder eine das Ausziehen des Sperrelements 3 aus dem Gehäuse 2 erleichternde Ausziehschräge aufweisen.

Wie insbesondere Fig. 11 entnehmbar ist, kann die Seele 40 bevorzugt bezüglich der inneren und äußeren Zahnabschnitte 42, 43 exzentrisch zu den Zähnen 41 angeordnet sein. Im Beispiel der Fig. 11 ist das Seelenprofil 44 gegenüber dem Zahnprofil 47 nach unten aus der Mitte verschoben. Dies entspricht einer Verschiebung oder Exzentrizität der Seele 40 in Richtung der äußeren Zahnabschnitte 42, die mit der Innennut 6 zusammenwirken. Hierdurch kann das Sperrelement 3 beim Einstecken des Steckabschnitts 4 leichter in die Innennut 6 elastisch ausweichen.

Bemerkenswert ist hier außerdem, dass zweckmäßig die Abmessungen in Umfangsrichtung 16 der Gehäuseöffnung 13, des zahnlosen Seelenabschnitts 53, des verwundenen Übergangsabschnitts 54 und des außen liegenden Endabschnitts 26 jeweils etwa gleich groß gewählt sind.

Ferner ist Fig. 10 entnehmbar, dass benachbarte Zähne 41 in der Umfangsrichtung 16 einen vergleichsweise großen Abstand voneinander aufweisen. Besagter Abstand entspricht etwa einer in Umfangsrichtung gemessenen Zahnbreite. Hierdurch ergibt sich eine besonders hohe Flexibilität und Stabilität für das Sperrelement 3.

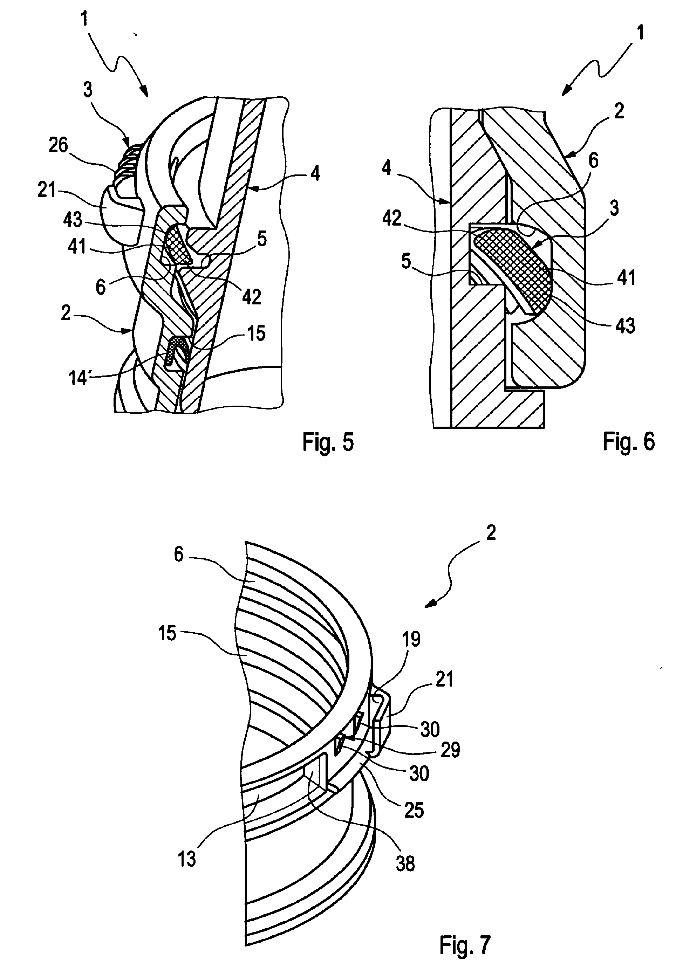

Den Fig. 5 und 6 ist entnehmbar, dass das Sperrelement 3, insbesondere im Hinblick auf seine inneren Zahnabschnitte 43 bevorzugt so geformt ist, dass mehrere unterschiedlich geformte Außennuten 5 hinreichend formschlüssig gesichert werden können. So zeigen die Fig. 5 und 6 zwei verschiedene Ausführungsformen für die Steckabschnitte 4 bzw. für die daran ausgebildeten Außennuten 5. Fig. 5 zeigt außerdem eine alternative Dichtung 14'.

Zweckmäßig kann das Sperrelement 3 aus Kunststoff spritzgeformt sein, wobei dieses Spritzformteil sowohl die Seele 40 als auch die Zähne 41 umfasst. Grundsätzlich kann das Sperrelement 3 dabei aus einem homogenen Kunststoff hergestellt werden, so dass die Seele 40 und die Zähne 41 keine Materialunterschiede aufweisen. Darüber hinaus ist es aber auch möglich, das Sperrelement 3 aus Kunststoff so herzustellen, dass es zumindest im Bereich der Seele 40 faserverstärkt sein kann, wobei sich die jeweiligen Verstärkungsfasern, wie z. B. Glasfasern oder Kohlefasern, vorzugsweise in der Umfangsrichtung erstrecken. Alternativ ist auch eine Ausführungsform denkbar, bei welcher das Sperrelement 3 dadurch hergestellt wird, dass die Zähne 41 an die Seele 40 angespritzt werden. Während die Zähne 41 vorzugsweise aus Kunststoff bestehen, kann die Seele 40 dann grundsätzlich ebenfalls aus Kunststoff, vorzugsweise aus einem anderen Kunststoff als die Zähne 41, oder aus einem anderen Material hergestellt sein. Entsprechendes gilt dann auch für den außen liegenden Endabschnitt 26, der ebenfalls an die Seele 40 angespritzt oder daran integral ausgeformt sein kann.

Sobald der Steckabschnitt 4 in die Anschlussvorrichtung 1 eingesteckt ist, sind das Gehäuse 2 und der Steckabschnitt 4 fluidisch miteinander verbunden. Hierdurch entsteht außerdem eine Anschlussanordnung 56, welche die Anschlussvorrichtung 1 und den darin eingesteckten Steckabschnitt 4 umfasst.

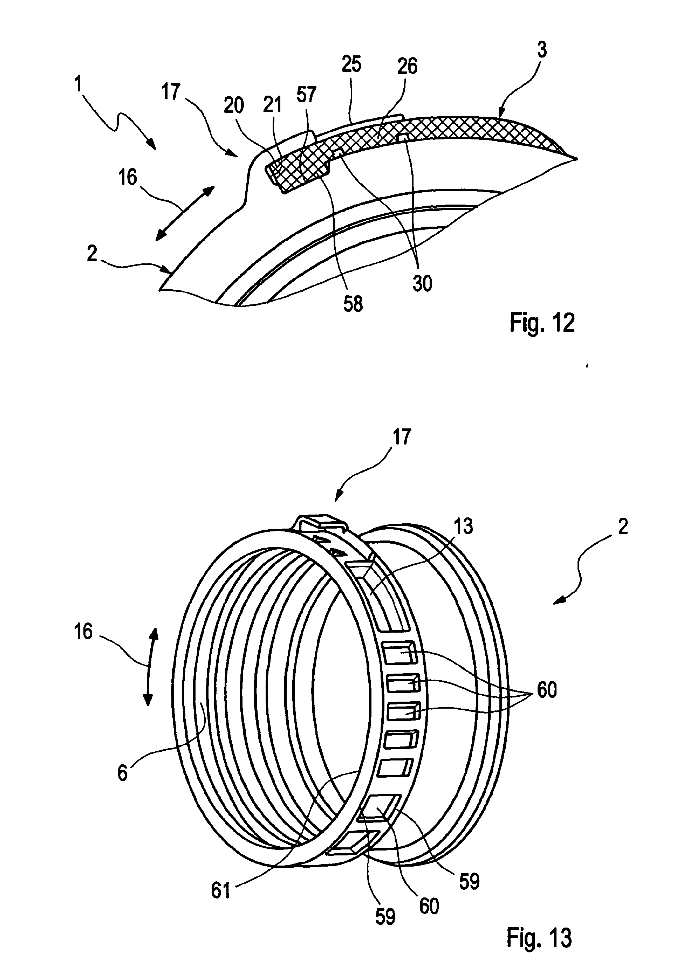

Entsprechend Fig. 12 kann gemäß einer anderen Ausführungsform der Sicherungseinrichtung 17 außen am Gehäuse 2 eine Vertiefung 57 vorgesehen sein. Diese Vertiefung 57 ist dabei am Gehäuse 2 so angeordnet, dass ein Vorsprung 58, der am außenliegenden Ende 20 des Sperrelements 3 nach innen absteht, in diese Vertiefung 57 eingreift. Hierdurch ergibt sich eine zusätzliche Fixierung des Sperrelements 3 in der Umfangsrichtung 16. Darüber hinaus ermöglicht der Vorsprung 58 ein vereinfachtes manuelles Herausziehen des Sperrelements 3 zum Lösen der Verbindung der Anschlussvorrichtung 1.

Im gezeigten Beispiel befindet sich die Vertiefung 57 innerhalb der Aufnahmetasche 21, so dass sie radial überlappt ist.

Entsprechend Fig. 13 kann das Gehäuse 2 mit Hilfe wenigstens einer Umfangsrippe 59 versteift sein. Die jeweilige Umfangsrippe 59 erstreckt sich dabei in der Umfangsrichtung 16, zweckmäßig ringförmig geschlossen. Die jeweilige Umfangsrippe 59 ist dabei außen am Gehäuse 2 angeordnet. Im Beispiels sind zwei derartige Umfangsrippen 59 vorgesehen, die zueinander axial beabstandet angeordnet sind. Darüber hinaus sind im Beispiel auch mehrere Längsrippen 60 vorgesehen, die ebenfalls außen am Gehäuse 2 angeordnet sind und sich dabei in der Längsrichtung des Gehäuses 2 erstrecken. Zweckmäßig sind die Längsrippen 60 dabei so dimensioniert, dass sie die beiden Umfangsrippen 59 miteinander verbinden. Die eine, in Fig. 13 dem Betrachter zugewandte Umfangsrippe 59 ist am freien Ende des Gehäuse 2 angeordnet, das eine Einstecköffnung 61 zum Einstecken des Steckabschnitts 4 aufweist. Ferner sind die beiden Umfangsrippen 59 am Gehäuse 2 hier bevorzugt so positioniert, dass sie sich axial beiderseits der Innennut 6 befinden, so dass die Innennut 6 axial zwischen den beiden Umfangsrippen 59 positioniert ist. Hierdurch wird das Gehäuse 2 im Bereich der Innennut 6 ausgesteift.

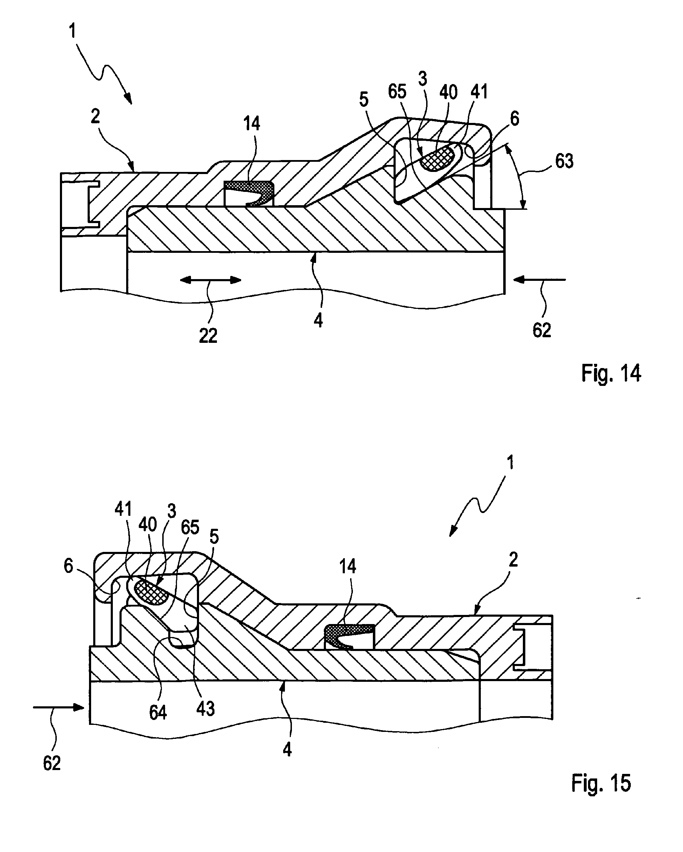

Entsprechend den Fig. 14 bis 17 kann die Außennut 5 des Steckabschnitts 4 quer zur Umfangsrichtung 16, also in der Axialrichtung 22 oder Längsrichtung 22 ein Rampenprofil 65 aufweisen. Das Rampenprofil 65 ist dabei so orientiert, dass es in einer durch einen Pfeil angedeuteten Einsteckrichtung 62 des Steckabschnitts 4 abfällt. Die Einsteckrichtung 62 definiert dabei die Relativbewegung des Steckabschnitts 4 relativ zum Gehäuse 2 beim Einstecken des Steckabschnitts 4 in das Gehäuse 2.

Durch die Rampenform der Außennut 5 soll die Gefahr reduziert werden, dass sich die Zähne 41 des Sperrelements 3 bei einer Zugkraft zwischen Steckabschnitt 4 und Gehäuse 2 zu sehr aufrichten, was zu großen radialen Kräften führen würde. Das Rampenprofil 65 bewirkt, dass die Zähne 41 weitgehend in einer vorbestimmten Ausrichtung bleiben und abgestützt sind. Beispielsweise besitzt das Rampenprofil 65 einen Rampenwinkel 63, der maximal 45° beträgt.

Bei der in Fig. 15 gezeigten Ausführungsform ist die Außennut 5 geometrisch so geformt, dass sie an einem innenliegenden Ende des Rampenprofils 65 eine Vertiefung 64 aufweist. Diese Vertiefung 64 ist dabei zweckmäßig so dimensioniert, dass die Zähne 41 des Sperrelements 3 in der Vertiefung 64 bzw. im Bereich der Vertiefung 64 radial freistehend angeordnet sind. Das heißt, die inneren Zahnabschnitte 43 der Zähne 41 können zum Teil in die Vertiefung 64 hineinragen, sind jedoch gegenüber dem radial innenliegenden Grund der Vertiefung 64 radial beabstandet. Diese Bauform hat zur Folge, dass sich die Zähne 41 radial nur am Rampenprofil 65 abstützen können, so dass die Tendenz zur Aufrichtung der Zähne 41 zusätzlich reduziert ist.

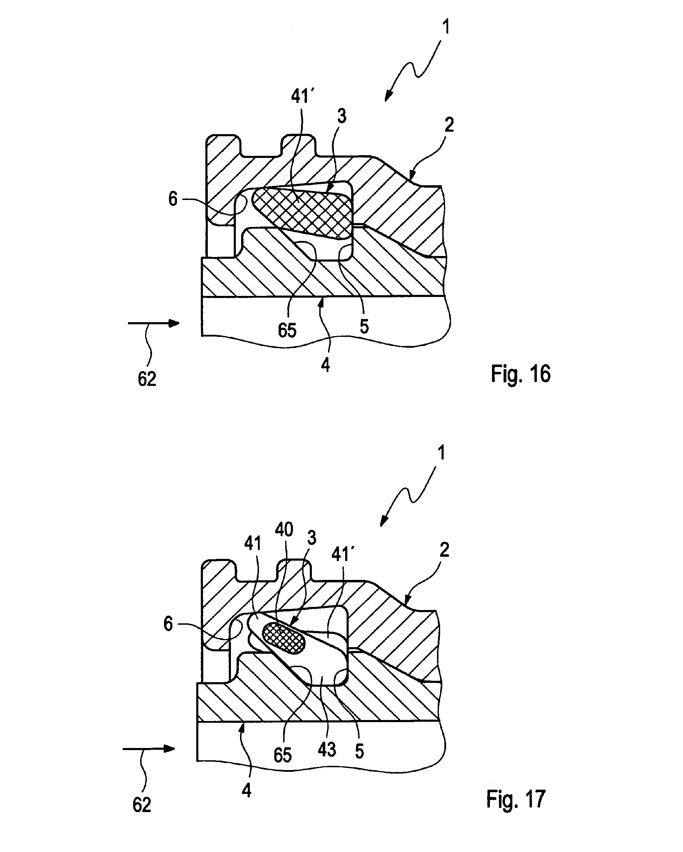

Entsprechend den Fig. 16 und 17 kann gemäß einer besonders vorteilhaften Ausführungsform zumindest ein "spezieller" Zahn 41' gegenüber den anderen "normalen Zähnen 41 hinsichtlich seiner Geometrie und/oder hinsichtlich seiner Ausrichtung gegenüber der Seele 40 unterschiedlich sein, also einen anderen Winkel zwischen Zahnhauptrichtung 48 und Seelenhauptrichtung 45 aufweisen. Im gezeigten Bespiel der Fig. 16 und 17 ist besagter spezieller Zahn 41' sowohl hinsichtlich seiner Geometrie als auch hinsichtlich seiner Ausrichtung gegenüber der Seele 40 unterschiedlich gegenüber den anderen normalen Zähnen 41. Zweckmäßig können entlang des Sperrelements 3 mehrere derartige spezielle Zähne 41' vorgesehen sein, jedoch insgesamt weniger als die Hälfte aller Zähne 41, 41'. Beispielsweise sind nur 10% oder maximal 10% der Zähne 41, 41' von den übrigen normalen Zähnen 41 abweichend gestaltet bzw. angeordnet. Diese unterschiedlichen, speziellen Zähne 41' sind dabei zweckmäßig in der Umfangsrichtung vorzugsweise gleichförmig beabstandet zueinander entlang des Sperrelements 3 verteilt angeordnet.

Wie den Fig. 16 und 17 entnehmbar ist, ist der jeweilige spezielle Zahn 41' so gestaltet bzw. angeordnet, dass er sich im vormontierten Zustand und insbesondere auch im eingesteckten Zustand in der Einsteckrichtung 62 in der Innennut 6 axial am Gehäuse 2 abstützt. Hierdurch wird beim Einstecken verhindert, dass sich das Sperrelement 3 axial relativ zum Gehäuse 2 verschiebt, derart, dass die anderen normalen Zähne 41 mit ihren inneren Zahnabschnitten 43 axial über die Innennut 6 vorstehen und dadurch zwischen dem Gehäuse 2 und dem Steckabschnitt 4 verklemmen können. Insbesondere lässt sich Fig. 17 gut entnehmen, dass sich im vormontierten Zustand bzw. in eingestecktem Zustand die normalen Zähne 41 mit ihrem inneren Zahnabschnitt 43 ausschließlich in der Außennut 5 am Steckabschnitt 4 axial abstützen, während sich die speziellen Zähne 41' in der Innennut 6 am Gehäuse 2 und im Beispiel außerdem in der Außennut 5 am Steckabschnitt 4 axial abstützen.

## Patentansprüche

1. Anschlussvorrichtung für einen eine ringförmige Außennut (5) aufweisenden Steckabschnitt (4) einer schlauchförmigen oder rohrförmigen Leitung oder eines Stutzens,
- mit einem Gehäuse (2), in welches der Steckabschnitt (4) einsteckbar ist,
- mit einem Sperrelement (3), mit dem der in das Gehäuse (2) eingesteckte Steckabschnitt (4) im Gehäuse (2) arretierbar ist,
- wobei das Sperrelement (3) zum Arretieren des Steckabschnitts (4) im Gehäuse (2) in die Außennut (5) und in eine im Gehäuse (2) ausgebildete ringförmige Innennut (6) eingreift,
- wobei das Sperrelement (3) durch eine Gehäuseöffnung (13) im Wesentlichen tangential zu den Nuten (5, 6) aus diesen herausziehbar ist,
- wobei das Sperrelement (3) in der Innennut (6) vormontierbar ist und im vormontierten Zustand unter elastischer Auslenkung das Einstecken des Steckabschnitts (4) in das Gehäuse (2) erlaubt und dabei in die Außennut (5) einrastet,
- wobei das Sperrelement (3) im vormontierten Zustand am Gehäuse (2) gegen ein Verschieben in der Umfangsrichtung (16) gesichert ist,
**dadurch gekennzeichnet,**
**dass** die Verschiebesicherung des Sperrelements (3) zumindest in der Auszugsrichtung (18) mittels einer außen am Gehäuse (2) angeordneten Sicherungseinrichtung (17) erfolgt.

2. Anschlussvorrichtung nach Anspruch 1,
**dadurch gekennzeichnet,**
**dass** die Sicherungseinrichtung (17) einen außen am Gehäuse (2) angeordneten Außenanschlag (19) aufweist, der einem außen liegenden Ende (20) des Sperrelements (3) im vormontierten Zustand in der Auszugsrichtung (18) gegenüber liegt.

3. Anschlussvorrichtung nach Anspruch 1 oder 2,
**dadurch gekennzeichnet,**
**dass** die Sicherungseinrichtung (17) eine außen am Gehäuse (2) angeordnete Aufnahmetasche (21) aufweist, in die ein außen liegendes Ende (20) des Sperrelements (3) im vormontierten Zustand eingesteckt ist.

4. Anschlussvorrichtung nach den Ansprüchen 2 und 3,
**dadurch gekennzeichnet,**
**dass** der Außenanschlag (19) in der Aufnahmetasche (21) ausgebildet ist.

5. Anschlussvorrichtung nach Anspruch 3 oder 4,
**dadurch gekennzeichnet,**
**dass** die Aufnahmetasche (21) an einer Axialseite offen ist, derart, dass das außen liegende Ende (20) des Sperrelements (3) durch die offene Axialseite (24) in die Aufnahmetasche (21) einsteckbar und daraus herausziehbar ist.

6. Anschlussvorrichtung nach einem der Ansprüche 3 bis 5,
**dadurch gekennzeichnet,**
**dass** die Aufnahmetasche (21) an einer Axialseite geschlossen und in Richtung zur Gehäuseöffnung (13) mittels eines Auflagestegs (25) verlängert ist, auf dem ein außen liegender Endabschnitt (26) des Sperrelements (3) im vormontierten Zustand axial anliegt.

7. Anschlussvorrichtung nach einem der Ansprüche 2 bis 6,
**dadurch gekennzeichnet,**
**dass** das Sperrelement (3) eine am außen liegenden Endabschnitt (26) ausgebildete Einbuchtung (27) aufweist, die zwischen dem Endabschnitt (26) und dem Auflagesteg (25) einen Schlitz (28) erzeugt, der als Werkzeugeingriff verwendbar ist.

8. Anschlussvorrichtung nach einem der Ansprüche 2 bis 7,
**dadurch gekennzeichnet,**
**dass** die Sicherungseinrichtung (17) eine Rasteinrichtung (29) aufweist, die zumindest eine Raste (30) aufweist, die im vormontierten Zustand mit einem außen liegenden Endabschnitt (26) des Sperrelements (3) zusammenwirkt, derart, dass die jeweilige Raste (30) ein axiales Verstellen des außen liegenden Endabschnitts (26) relativ zum Gehäuse (2) behindert.

9. Anschlussvorrichtung nach Anspruch 8,
**dadurch gekennzeichnet,**
**dass** das Sperrelement (3) an seinem außen liegenden Endabschnitt (26) einen axial abstehenden Bereich (31) aufweist, wobei die Rasteinrichtung (29) zwei derartige Rasten (30) aufweist, die im vormontierten Zustand in der Umfangsrichtung (16) beiderseits des abstehenden Bereichs (31) des Sperrelements (3) angeordnet sind.

10. Anschlussvorrichtung nach einem der Ansprüche 1 bis 9,
**dadurch gekennzeichnet,**
**dass** ein außen liegender Endabschnitt (26) des Sperrelements (3) einen sich in der Umfangsrichtung (16) erstreckenden radialen Schlitz (34) und/oder zumindest sich in Umfangsrichtung (16) oder in Axialrichtung (22) erstreckenden radialen Vorsprung (33) aufweist.

11. Anschlussvorrichtung nach einem der Ansprüche 1 bis 10,
**dadurch gekennzeichnet,**
- **dass** außen am Gehäuse (2) eine Abdeckung (35) vorgesehen ist, die im vormontierten Zustand das Sperrelement (3) zumindest im Bereich der Gehäuseöffnung (13) radial abdeckt, wobei insbesondere vorgesehen sein kann, dass die Abdeckung (35) auch die Sicherungseinrichtung (17) zumindest teilweise abdeckt, und/oder
- **dass** die Gehäuseöffnung (13) in der Umfangsrichtung (16) größer ist, insbesondere zumindest zwei Mal größer ist, als in der Axialrichtung (22), und/oder
- **dass** die Gehäuseöffnung (13) in der Umfangsrichtung (16) etwa gleich groß ist wie ein im vormontierten Zustand außen liegender Endabschnitt (26) des Sperrelements (3).

12. Anschlussvorrichtung nach einem der Ansprüche 1 bis 11,
**dadurch gekennzeichnet,**
- **dass** die Gehäuseöffnung (13) an einem ersten Ende (36), das im vormontierten Zustand zu einem innen liegenden Ende (37) des Sperrelements (3) distal angeordnet ist, einen radialen ersten Rand aufweist, der von der Innennut (6) direkt radial zur Außenseite des Gehäuses (2) führt, und/oder
- **dass** die Gehäuseöffnung (13) an einem zweiten Ende (38), das im vormontierten Zustand zum innen liegenden Ende (37) des Sperrelements (3) proximal angeordnet ist, einen radialen zweiten Rand aufweist, der von einer Innenseite des Gehäuses (2) direkt radial zur Außenseite des Gehäuses (2) führt.

13. Anschlussvorrichtung nach Anspruch 12,
**dadurch gekennzeichnet,**
**dass** der zweite Rand oder das zweite Ende (38) einen die Innennut (6) in der Umfangsrichtung (16) zur Gehäuseöffnung (13) hin begrenzenden, sich axial erstreckenden Quersteg (39) aufweist.

14. Anschlussvorrichtung nach einem der Ansprüche 1 bis 13,
**dadurch gekennzeichnet,**
**dass** die Sicherungseinrichtung (17) eine außen am Gehäuse (2) angeordnete Vertiefung (57) aufweist, in die ein Vorsprung (58) eingreift, der von einem außenliegenden Ende (20) des Sperrelements (3) nach innen absteht.

15. Anschlussvorrichtung nach einem der Ansprüche 1 bis 14,
**dadurch gekennzeichnet,**
- **dass** das Gehäuse (2) außen zumindest eine sich in Umfangsrichtung (16) erstreckende Umfangsrippe (59) aufweist,
- wobei insbesondere vorgesehen sein kann, dass die wenigstens eine Umfangsrippe (59) an einem die Einstecköffnung (61) zum Einstecken des Steckabschnitts (4) aufweisenden Ende des Gehäuses (2) angeordnet ist,
- wobei insbesondere vorgesehen sein kann, dass zumindest zwei axial voneinander beabstandete Umfangsrippen (59) vorgesehen sind,
- wobei insbesondere vorgesehen sein kann, dass die Innennut (6) axial zwischen zwei solchen Umfangsrippen (59) angeordnet ist,
- wobei insbesondere vorgesehen sein kann, dass das Gehäuse (2) außen mehrere sich in Längsrichtung (22) erstreckende Längsrippen (60) aufweist, die jeweils zumindest zwei Umfangsrippen (59) miteinander verbinden.

## Claims

1. A connection device for an insertion section (4) of a tubular or pipe-shaped conduit or of a connection piece, said insertion section (4) having an annular outer groove (5),
- with a housing (2), into which the insertion section (4) is able to be inserted,
- with a blocking element (3), with which the insertion section (4), once inserted into the housing (2), can be locked in the housing (2),
- wherein the blocking element (3) for locking the insertion section (4) in the housing (2) engages into the outer groove (5) and into an annular inner groove (6) formed in the housing (2),
- wherein the blocking element (3) is able to be withdrawn through a housing opening (13) substantially tangentially to the grooves (5, 6) from the latter,
- wherein the blocking element (3) can be pre-fitted in the inner groove (6) and in the pre-fitted state allows, with elastic deflection, the insertion of the insertion section (4) into the housing (2), said blocking element (3) thus engaging in the outer groove (5),
- wherein the blocking element (3) in the pre-fitted state is fixed on the housing (2)such that it is secured against a displacement in the circumferential direction (16),
**characterized in that**
the securing of the blocking element (3) against displacement takes place at least in the withdrawal direction (18) by means of a securing device (17) arranged on the outside of the housing (2).

2. The connection device according to Claim 1,
**characterized in that**
the securing device (17) has an outer stop (19) arranged on the outside of the housing (2), which lies opposite an end (20) of the blocking element (3) lying on the exterior in the pre-fitted state in the withdrawal direction (18).

3. The connection device according to Claim 1 or 2,
**characterized in that**
the securing device (17) has a mounting pocket (31) arranged on the outside of the housing (2), into which an end (20) of the blocking element (3) lying on the exterior is inserted in the pre-fitted state.

4. The connection device according to one of Claims 2 and 3,
**characterized in that**
the outer stop (19) is constructed in the mounting pocket (21).

5. The connection device according to Claim 3 or 4,
**characterized in that**
the mounting pocket (21) is open on an axial side, such that the end (20) of the blocking element (3) lying on the exterior is able to be inserted through the open axial side (24) into the mounting pocket (21) and is able to be withdrawn therefrom.

6. The connection device according to one of Claims 3 to 5,
**characterized in that**
the mounting pocket (21) is closed on an axial side and is lengthened in the direction towards the housing opening (13) by means of a support web (25), on which an end section (26) of the blocking element (3) lying on the exterior lies in the pre-fitted state.

7. The connection device according to one of Claims 2 to 6,
**characterized in that**
the blocking element (3) has an indentation (27) formed on the end section (26) lying on the exterior, which produces a slot (28) between the end section (26) and the support web (25), which is able to be used as a tool access.

8. The connection device according to one of Claims 2 to 7,
**characterized in that**
the securing device (17) has a detent device (29), which has at least one detent (30), which in the pre-fitted state interacts with an end section (26) of the blocking element (3) lying on the exterior, such that the respective detent (30) impedes an axial adjustment of the end section (26) lying on the exterior, relative to the housing (2).

9. The connection device according to Claim 8,
**characterized in that**
the blocking element (3) has an axially protruding region (31) on its end section (26) lying on the exterior, wherein the detent device (29) has two such detents (30), which in the pre-fitted state are arranged in the circumferential direction (16) on both sides of the protruding region (31) of the blocking element (3).

10. The connection device according to one of Claims 1 to 9,
**characterized in that**
an end section (26) of the blocking element (3) lying on the exterior has a radial slot (34) extending in the circumferential direction (16) and/or at least a radial projection (33) extending in the circumferential direction (16) or in the axial direction (22).

11. The connection device according to one of Claims 1 to 10,
**characterized in that**
- on the outside of the housing (2) a cover (35) is provided, which in the pre-fitted state covers the blocking element (3) radially at least in the region of the housing opening (13), wherein in particular provision can be made that the cover (35) also at least partially covers the securing device (17), and/or
- that the housing opening (13) is greater in the circumferential direction (16), in particular two times greater, than in the axial direction (22), and/or
- that the housing opening (13) is approximately equal in size in the circumferential direction (16) to an end section (26) of the blocking element (3) lying on the exterior in the pre-fitted state.

12. The connection device according to one of Claims 1 to 11,
**characterized in that**
- the housing opening (13) at a first end (36), which in the pre-fitted state is arranged distally to an end (37) of the blocking element (3) lying on the interior, has a radial first edge which leads from the inner groove (6) directly radially to the outer side of the housing (2), and/or
- that the housing opening (13) at a second end (38), which in the pre-fitted state is arranged proximally to the end (37) of the blocking element (3) lying on the interior, has a radial second edge, which leads from an inner side of the housing (2) directly radially to the outer side of the housing (2).

13. The connection device according to Claim 12,
**characterized in that**
the second edge or the second end (38) has an axially extending transverse web (39) delimiting the inner groove (6) in the circumferential direction (16) towards the housing opening (13).

14. The connection device according to one of Claims 1 to 13,
**characterized in that**
the securing device (17) has a depression (57) arranged on the outside of the housing (2), into which a projection (58) engages, which protrudes inwards from an end (20) of the blocking element (3) lying on the exterior.

15. The connection device according to one of Claims 1 to 14,
**characterized in that**
- the housing (2) has externally at least one peripheral rib (59) extending in circumferential direction (16),
- wherein in particular provision can be made that the at least one peripheral rib (59) is arranged at an end of the housing (2) having the insertion opening (61) for the insertion of the insertion section (4),
- wherein in particular provision can be made that at least two peripheral ribs (59) are provided spaced apart from each other axially,
- wherein in particular provision can be made that the inner groove (6) is arranged axially between two such peripheral ribs (59),
- wherein in particular provision can be made that the housing (2) has externally several longitudinal ribs (60) extending in longitudinal direction (22), which respectively connect at least two peripheral ribs (59) with each other.

## Revendications

1. Dispositif de raccordement pour une portion mâle (4) ayant une rainure extérieure annulaire (5), d'une conduite en forme de tuyau flexible ou tubulaire ou d'une tubulure,
- avec un boîtier (2) dans lequel ladite portion mâle (4) peut être engagée,
- avec un élément de blocage (3) au moyen duquel ladite portion mâle (4) engagée dans le boîtier (2) peut être arrêtée dans le boîtier (2),
- pour arrêter la portion mâle (4) dans le boîtier (2), ledit élément de blocage (3) s'engageant dans la rainure extérieure (5) et dans une rainure intérieure annulaire (6) réalisée dans le boîtier (2),
- ledit élément de blocage (3) pouvant être retiré des rainures (5, 6) à travers une ouverture de boîtier (13), pour l'essentiel tangentiellement à celles-ci,
- ledit élément de blocage (3) pouvant être pré-monté dans la rainure intérieure (6) et permettant en état pré-monté, en étant dévié élastiquement, l'engagement de la portion mâle (4) dans le boîtier (2), tout en s'encliquetant dans la rainure extérieure (5),
- en état pré-monté sur le boîtier (2), ledit élément de blocage (3) étant bloqué en translation dans la direction circonférentielle (16),
**caractérisé par le fait**
**que** ledit blocage en translation de l'élément de blocage (3) se fait au moins dans la direction de retrait (18) au moyen d'un dispositif d'arrêt (17) disposé sur la face extérieure du boîtier (2).

2. Dispositif de raccordement selon la revendication 1, **caractérisé par le fait que** ledit dispositif d'arrêt (17) présente une butée extérieure (19) qui est disposée sur la face extérieure du boîtier (2) et qui se trouve en regard d'une extrémité (20) située à l'extérieur, de l'élément de blocage (3) en état pré-monté dans ladite direction de retrait (18).

3. Dispositif de raccordement selon la revendication 1 ou 2, **caractérisé par le fait que** ledit dispositif d'arrêt (17) présente une poche de réception (21) qui est disposée sur la face extérieure du boîtier (2) et dans laquelle est engagée une extrémité (20) située à l'extérieur, de l'élément de blocage (3) en état pré-monté.

4. Dispositif de raccordement selon les revendications 2 et 3, **caractérisé par le fait que** ladite butée extérieure (19) est réalisée dans ladite poche de réception (21).

5. Dispositif de raccordement selon la revendication 3 ou 4, **caractérisé par le fait que** ladite poche de réception (21) est ouverte sur un côté axial, de telle manière que ladite extrémité (20) située à l'extérieur, de l'élément de blocage (3) puisse être engagée dans la poche de réception (21) à travers ledit côté axial ouvert (24) et être retirée de celle-ci.

6. Dispositif de raccordement selon l'une quelconque des revendications 3 à 5, **caractérisé par le fait que** ladite poche de réception (21) est fermée sur un côté axial et est prolongée en direction de ladite ouverture de boîtier (13) au moyen d'une entretoise d'appui (25) sur laquelle s'appuie axialement une portion terminale (26) située à l'extérieur, de l'élément de blocage (3) en état pré-monté.

7. Dispositif de raccordement selon l'une quelconque des revendications 2 à 6, **caractérisé par le fait que** ledit élément de blocage (3) présente une échancrure (27) qui est réalisée sur ladite portion terminale (26) située à l'extérieur et qui crée une fente (28) entre ladite portion terminale (26) et ladite entretoise d'appui (25), qui peut être utilisée en tant que point d'introduction d'outil.

8. Dispositif de raccordement selon l'une quelconque des revendications 2 à 7, **caractérisé par le fait que** ledit dispositif d'arrêt (17) présente un dispositif d'encliquetage (29) qui présente au moins un cran d'arrêt (30) lequel, en état pré-monté, agit de concert avec une portion terminale (26) située à l'extérieur, de l'élément de blocage (3), de telle manière que le cran d'arrêt (30) respectif entrave un réglage axial de ladite portion terminale (26) située à l'extérieur, par rapport au boîtier (2).

9. Dispositif de raccordement selon la revendication 8, **caractérisé par le fait que** ledit élément de blocage (3) présente, sur sa portion terminale (26) située à l'extérieur, une zone (31) faisant saillie axialement, le dispositif d'encliquetage (29) présentant deux de tels crans d'arrêt (30) qui, en état pré-monté, sont disposés dans la direction circonférentielle (16) de part et d'autre de ladite zone (31) en saillie de l'élément de blocage (3).

10. Dispositif de raccordement selon l'une quelconque des revendications 1 à 9, **caractérisé par le fait qu'**une portion terminale (26) située à l'extérieur, de l'élément de blocage (3) présente une fente radiale (34) s'étendant dans la direction circonférentielle (16) et/ou au moins une projection (33) s'étendant dans la direction circonférentielle (16) ou dans la direction axiale (22).

11. Dispositif de raccordement selon l'une quelconque des revendications 1 à 10, **caractérisé par le fait**
- **qu'**une couverture (35) est prévue sur la face extérieure du boîtier (2), qui, en état pré-monté, couvre radialement ledit élément de blocage (3) au moins au niveau de ladite ouverture de boitier (13), dans lequel il peut être prévu en particulier que ladite couverture (35) couvre également, au moins en partie, ledit dispositif d'arrêt (17), et/ou
- **que** ladite ouverture de boîtier (13) est plus grande dans la direction circonférentielle (16), en particulier au moins deux fois plus grande, que dans la direction axiale (22), et/ou
- **que** ladite ouverture de boîtier (13) est, dans la direction circonférentielle (16), à peu près aussi grande qu'une portion terminale (26) de l'élément de blocage (3) située à l'extérieur en état pré-monté.

12. Dispositif de raccordement selon l'une quelconque des revendications 1 à 11, **caractérisé par le fait**
- **que** ladite ouverture de boîtier (13) présente, à une première extrémité (36) qui, en état pré-monté, est disposée de façon distale par rapport à une extrémité intérieure (37) de l'élément de blocage (3), un premier bord radial qui mène de la rainure intérieure (6) directement radialement à la face extérieure du boîtier (2), et/ou
- **que** ladite ouverture de boîtier (13) présente, à une deuxième extrémité (38) qui, en état pré-monté, est disposée de façon proximale par rapport à ladite extrémité intérieure (37) de l'élément de blocage (3), un deuxième bord radial qui mène d'une face intérieure du boîtier (2) directement radialement à la face extérieure du boîtier (2).

13. Dispositif de raccordement selon la revendication 12, **caractérisé par le fait que** ledit deuxième bord ou ladite deuxième extrémité (38) présente une traverse (39) délimitant la rainure intérieure (6) dans la direction circonférentielle (16) vers ladite ouverture de boîtier (13) et s'étendant axialement.

14. Dispositif de raccordement selon l'une quelconque des revendications 1 à 13, **caractérisé par le fait que** ledit dispositif d'arrêt (17) présente un creux (57) qui est disposé sur la face extérieure du boîtier (2) et dans lequel s'engage une projection (58) qui fait saillie vers l'intérieur depuis une extrémité (20) située à l'extérieur, de l'élément de blocage (3).

15. Dispositif de raccordement selon l'une quelconque des revendications 1 à 14, **caractérisé par le fait**
- **que** ledit boîtier (2) présente à l'extérieur au moins une nervure circonférentielle (59) s'étendant dans la direction circonférentielle (16),
- dans lequel il peut être prévu en particulier que ladite au moins une nervure circonférentielle (59) est disposée à une extrémité du boîtier (2), qui présente ladite ouverture d'introduction (61) destinée à y engager ladite portion mâle (4),
- dans lequel il peut être prévu en particulier qu'au moins deux nervures circonférentielles (59) espacées axialement l'une de l'autre sont prévues,
- dans lequel il peut être prévu en particulier que ladite rainure intérieure (6) est disposée axialement entre deux de telles nervures circonférentielles (59),
- dans lequel il peut être prévu en particulier que ledit boîtier (2) présente à l'extérieur une pluralité de nervures longitudinales (60) qui s'étendent dans la direction longitudinale (22) et qui relient chacune au moins deux nervures circonférentielles (59) l'une à l'autre.
